# EUROPEAN PATENT APPLICATION

(11) **EP 3 569 571 A1**
(43) Date of publication of application: **20.11.2019**
(21) Application number: 17890900.8
(22) Date of filing: 15.12.2017
(51) Int. Cl.: C01B 32/168, D02G 3/16

(54) **METHOD FOR DRAWING CARBON NANOTUBE WEB**

(30) Priority: 16.01.2017 JP 2017005433
(71) Applicant: Hitachi Zosen Corporation, Osaka-shi, Osaka 559-8559 (JP)
(72) Inventor: FUJIMOTO, Norifumi, Osaka-shi Osaka 559-8559 (JP); INOUE, Tetsuya, Osaka-shi Osaka 559-8559 (JP)
(74) Representative: Grünecker Patent- und Rechtsanwälte PartG mbB
(86) International application number: PCT/JP2017/045130
(87) International publication number: WO 2018/131386

(57) **Abstract**

An object of the present invention is to prevent edge scraps from being generated when carbon nanotubes are drawn out, and to prevent generated edge scraps from being mixed in a carbon nanotube web. A method for drawing out a carbon nanotube web in accordance with an aspect of the present invention includes a hard-to-draw part forming step of forming grooves (11) each of which has a width that is smaller than a length of one CNT (2) in a CNT array (1) and forming hard-to-draw parts (12) which are formed in regions abutting on the grooves (11) and in which the CNTs (2) are difficult to draw out from the CNT array (1), and a drawing out step of drawing a CNT web (10) out from a region between the plurality of hard-to-draw parts (12) in the CNT array (1).

## Description

### Technical Field

The present invention relates to a drawing method for drawing a carbon nanotube web out from a carbon nanotube array.

### Background Art

Carbon nanotubes are receiving attention as a material having excellent electrical conductivity, heat conductivity, and mechanical strength, and are increasingly used in various fields. In a case where the carbon nanotubes are utilized, the carbon nanotubes are sometimes formed into a film (also called as web) or a yarn in accordance with their utilization form.

Patent Literature 1 discloses a manufacturing method for obtaining a carbon nanotube film. The manufacturing method includes the following steps:
First step: Grow, on a substrate, a carbon nanotube array including a plurality of carbon nanotubes which are vertically arranged.
Second step: form at least two grooves, which extend in parallel and are arranged apart from each other, on a surface of the carbon nanotube array which surface is opposite to a surface making contact with the substrate.
Third step: Fix, to a drawing device, ends of a plurality of carbon nanotubes which are included in the carbon nanotube array and are located between adjacent grooves.
Fourth step: Move the drawing device in a length direction of the grooves so as to detach the plurality of carbon nanotubes from the carbon nanotube array, and thus obtain at least one sheet of carbon nanotube film.

The second step of the manufacturing method is carried out in order to define a film width with which the carbon nanotube film is drawn out from the carbon nanotube array. That is, carbon nanotubes in an inner side region located between the formed two grooves are disconnected from carbon nanotubes which face the inner side region and are located on the outer sides of the grooves. Therefore, in a case where the plurality of carbon nanotubes are drawn out from the inner side region, the carbon nanotubes on the outer sides of the grooves will not be drawn out while being connected with the carbon nanotubes in the inner side region. As a result, according to Patent Literature 1, the carbon nanotube film can be obtained which has a uniform width corresponding to the inner side region defined by the two grooves.

### Citation List

### [Patent Literature]

[Patent Literature 1]
Japanese Patent Application Publication, Tokukai, No. 2011-37703 (Publication Date: February 24, 2011)

### Summary of Invention

### Technical Problem

However, the inventors of the present invention have found that the manufacturing method disclosed in Patent Literature 1 has the following problem.

According to the technique disclosed in Patent Literature 1, in the vicinity of the grooves formed with the laser method, a certain amount of carbon nanotubes exist which have been incompletely influenced by the laser beam. Those carbon nanotubes have disturbance in degree of connection with the other carbon nanotubes. Therefore, in a case where a carbon nanotube film is continuously drawn out from the carbon nanotube array, a phenomenon sometimes occurs in which, in the vicinity of the grooves, the carbon nanotubes which have been incompletely influenced by the laser beam are mixed, as a lump, in a carbon nanotube film to be drawn out. Note that the remaining or mixed carbon nanotubes are seen as substances such as scraps generated at edges, and are accordingly hereinafter referred to as "edge scraps".

As a result, the edge scraps are unevenly mixed in the carbon nanotube film which is drawn out, and this causes unevenness in physical properties (e.g., electrical conductivity, heat conductivity, mechanical strength) among different portions of the carbon nanotube film.

Moreover, according to the technique of Patent Literature 1, in a case where a width of the groove is smaller than a length of carbon nanotubes in the carbon nanotube array, carbon nanotubes in regions which are not the grooves and are adjacent to the region between the grooves may be connected, across the grooves, to carbon nanotubes located between the adjacent grooves. Therefore, according to the technique of Patent Literature 1, the width of each of the grooves needs to be set larger, and accordingly many carbon nanotubes formed in the grooves cannot be utilized as a carbon nanotube web. That is, the technique of Patent Literature 1 has a problem that a ratio of carbon nanotubes to be drawn out as a carbon nanotube web from a carbon nanotube array is low.

An aspect of the present invention is accomplished as a result of diligent studies for solving the problem, and an object of the present invention is to provide a method for drawing a carbon nanotube web while preventing edge scraps from being generated when carbon nanotubes are drawn out, preventing generated edge scraps from being mixed in a carbon nanotube web, and increasing a ratio of carbon nanotubes to be drawn out as a carbon nanotube web among carbon nanotubes in a carbon nanotube array.

### Solution to Problem

In order to attain the object, a method for drawing out a carbon nanotube web in accordance with an aspect of the present invention is a method for drawing out a carbon nanotube web from a carbon nanotube array and includes: a hard-to-draw part forming step of (i) forming a plurality of grooves on at least one surface of the carbon nanotube array which at least one surface is perpendicular to an orientation direction of carbon nanotubes such that each of the plurality of grooves has a width that is smaller than a length of one carbon nanotube in the carbon nanotube array and (ii) forming, on the carbon nanotube array, a plurality of hard-to-draw parts in which the carbon nanotubes are difficult to draw out from the carbon nanotube array when the carbon nanotube web is drawn out from a region between the plurality of grooves in the carbon nanotube array, the plurality of hard-to-draw parts being formed in respective regions which are provided between adjacent two of the plurality of grooves so as to abut on the adjacent two of the plurality of grooves; and a drawing out step of drawing the carbon nanotube web out from a region between the plurality of hard-to-draw parts in the carbon nanotube array.

### Advantageous Effects of Invention

According to an aspect of the present invention, it is possible to prevent edge scraps from being generated when carbon nanotubes are drawn out, to prevent generated edge scraps from being mixed in a carbon nanotube web, and to increase a ratio of carbon nanotubes to be drawn out as a carbon nanotube web among carbon nanotubes in a carbon nanotube array.

### Brief Description of Drawings

Fig. 1 is a cross-sectional view illustrating a carbon nanotube array in accordance with Embodiment 1 of the present invention.
Fig. 2 is a view for explaining a hard-to-draw part forming step in Embodiment 1. (a) of Fig. 2 is a plan view illustrating a carbon nanotube array after the hard-to-draw part forming step, and (b) of Fig. 2 is a cross-sectional view taken along the line A-A in (a) of Fig. 2.
Fig. 3 is a view for explaining a drawing out step in Embodiment 1. (a) of Fig. 3 is a plan view illustrating a state in which a carbon nanotube web has begun to be drawn out from a carbon nanotube array, (b) of Fig. 3 is a plan view illustrating a state in which the carbon nanotube web is drawn out from the carbon nanotube array, and (c) of Fig. 3 is a cross-sectional view taken along the line A-A in (b) of Fig. 3 and illustrates a state after the carbon nanotube web has been drawn out from the carbon nanotube array.
Fig. 4 is a view for explaining a method for manufacturing a carbon nanotube yarn in Embodiment 1, specifically, a plan view illustrating a state of manufacturing a carbon nanotube yarn while drawing out a carbon nanotube web.
Fig. 5 is a view for explaining a method for manufacturing a carbon nanotube yarn in accordance with Embodiment 2 of the present invention. (a) of Fig. 5 is a plan view illustrating a carbon nanotube array after a hard-to-draw part forming step, and (b) of Fig. 5 is a plan view illustrating a state of manufacturing a carbon nanotube yarn while drawing out a carbon nanotube web.
Fig. 6 is a view for explaining a method for manufacturing a carbon nanotube yarn in accordance with Embodiment 3 of the present invention. (a) of Fig. 6 is a plan view illustrating a carbon nanotube array after a hard-to-draw part forming step, and (b) of Fig. 6 is a plan view illustrating a state of manufacturing a carbon nanotube yarn while drawing out a carbon nanotube web.
Fig. 7 is a view for explaining a method for manufacturing a carbon nanotube yarn in accordance with Embodiment 4 of the present invention. (a) of Fig. 7 is a plan view illustrating a carbon nanotube array after a hard-to-draw part forming step, and (b) of Fig. 7 is a plan view illustrating a state of manufacturing a carbon nanotube yarn while drawing out a carbon nanotube web.
Fig. 8 is a view for explaining Example and Comparative Examples of the drawing out method in accordance with the present invention, and illustrates a carbon nanotube array after carbon nanotube webs have been drawn out from the carbon nanotube array.
(a) through (c) of Fig. 9 are enlarged views showing the vicinity of edges in a width direction of a carbon nanotube array, and show states after carbon nanotube webs have been drawn out by the respective drawing out methods of Comparative Example 1, Comparative Example 2, and Example 1.
Fig. 10 is a bird's-eye view showing a state in which a carbon nanotube web is being drawn out from a carbon nanotube array by the drawing out method of Example 1.

### Description of Embodiments

### Embodiment 1

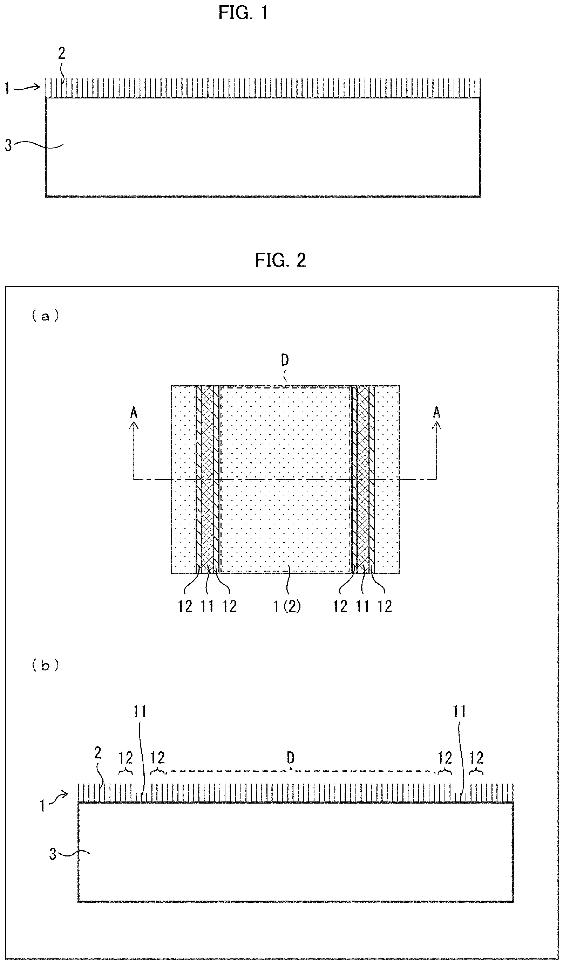

The following description will discuss details of a method for drawing out a carbon nanotube web in accordance with Embodiment 1 of the present invention, with reference to Figs. 1 through 4. Note that an expression "A to B" in this specification means "not less than A and not more than B".

### (Carbon nanotube array)

First, the following description will discuss, with reference to a cross-sectional view of Fig. 1, a carbon nanotube array used in Embodiment 1. Fig. 1 is a cross-sectional view illustrating a carbon nanotube array used in Embodiment 1.

Note that the "carbon nanotube array" indicates an aggregate of carbon nanotubes which have grown on a substrate such that portions of the carbon nanotubes which portions extend in a long-axis direction are at least partially oriented in a certain direction. Hereinafter, the carbon nanotubes are abbreviated to "CNT", the carbon nanotube array is abbreviated to "CNT array", and the carbon nanotube web is abbreviated to "CNT web".

A CNT array 1 has a configuration in which a plurality of CNTs 2 are provided on a substrate 3 such that a long-axis direction of each of the CNTs 2 is oriented in a substantially vertical direction (see Fig. 1). The CNT array 1 is manufactured with a chemical vapor deposition (CVD) method. The following description will discuss a method for manufacturing the CNT array 1.

The CNT array 1 is formed as follows: that is, the substrate 3 having a surface on which a catalyst layer has been provided is placed in a thermal CVD chamber which has been preheated to a predetermined temperature (600°C to 1000°C) in advance, and then a gas is fed into the thermal CVD chamber for a predetermined time period.

More specifically, in Embodiment 1, a stainless steel substrate is used as the substrate 3. Note, however, that the substrate 3 is not limited to the stainless steel substrate, and it is possible to use, for example, a silicon substrate, a quartz substrate, or the like. In a case where the stainless steel substrate is used as the substrate 3, it is preferable to provide a buffer layer between the substrate 3 and the catalyst layer. This makes it possible to prevent the catalyst layer from being influenced by chromium which is a constituent element of stainless steel. The buffer layer is made of, for example, silica or alumina. Note that the substrate 3 in accordance with Embodiment 1 is not limited to the plate-like member, provided that the substrate 3 is a substrate having a surface for forming the CNT array 1.

In Embodiment 1, the catalyst layer is made of iron (Fe), and is formed with an electron beam (EB) method. Note, however, that the catalyst layer in accordance with the present invention is not limited to Fe and can be made of, for example, cobalt (Co), nickel (Ni), or the like. The catalyst layer in accordance with an aspect of the present invention can be formed with a sputtering method, a vacuum vapor deposition method, or the like.

In Embodiment 1, acetylene is used as the gas. Note, however, that the gas in an aspect of the present invention can be any of alkanes such as methane, ethane, propane, or hexane; an unsaturated organic compound such as any of ethylenes or propylene; or an aromatic compound such as benzene or toluene.

In a case where the CNT array 1 is manufactured as above described, each of the CNTs 2 constituting the CNT array 1 in accordance with Embodiment 1 is formed as a multi-walled CNT which is constituted by 5 to 10 layers and has an outer diameter of 10 nm to 30 nm and a length of 50 µm to 1000 µm. Further, the CNT array 1 is preferably constituted by 10⁹ to 10¹¹ pieces of the CNTs 2 per square centimeter.

Note that the CNT array used in the present invention is not limited to the above described one. That is, the CNT array used in an aspect of the present invention only needs to be, as above described, an aggregate of CNTs which have grown on a substrate such that portions of the CNTs which portions extend in the long-axis direction are at least partially oriented in a certain direction. The CNT can be, for example, a single-walled CNT or a multi-walled CNT (including two or more layers).

### (Method for drawing out CNT web)

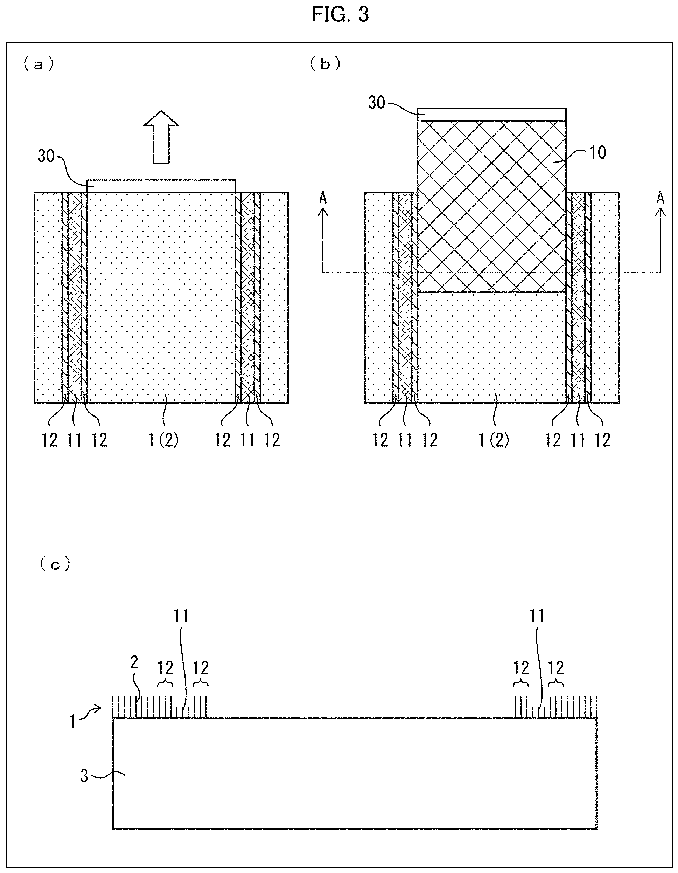

The following description will discuss a method for drawing the CNT web 10 out from the CNT array 1, with reference to Figs. 2 and 3.

A method for drawing out the CNT web 10 in accordance with Embodiment 1 includes a hard-to-draw part forming step and a drawing out step. Hereinafter, each of the steps will be described in detail.

### <Hard-to-draw part forming step>

The hard-to-draw part forming step is a step of (i) forming a plurality of grooves on at least one surface of the carbon nanotube array which at least one surface is perpendicular to an orientation direction of carbon nanotubes such that each of the plurality of grooves has a width that is smaller than a length of one carbon nanotube in the carbon nanotube array and (ii) forming, in an inner side region of the carbon nanotube array, hard-to-draw parts in which carbon nanotubes are difficult to draw out from the carbon nanotube array when a carbon nanotube web is drawn out from the carbon nanotube array. The inner side region is a region which is provided between adjacent two of the plurality of grooves so as to abut on the adjacent two of the plurality of grooves.

The following description will discuss the hard-to-draw part forming step of Embodiment 1 with reference to Fig. 2. Note that a hard-to-draw part 12 is a region which is in a CNT array 1 and in which CNTs 2 will not be drawn out from the CNT array 1 when a CNT web 10 is drawn out from the CNT array 1 in the drawing out step (later described). Fig. 2 is a view for explaining a hard-to-draw part forming step in Embodiment 1. (a) of Fig. 2 is a plan view illustrating the CNT array 1 after the hard-to-draw part forming step, and (b) of Fig. 2 is a cross-sectional view taken along the line A-A in (a) of Fig. 2. Here, the "CNT web" indicates an aggregate of CNTs which are formed, in a reticulate pattern, when some CNTs are pulled out from the CNT array in a certain direction (typically, in a direction along a surface of the substrate) and other CNTs are also drawn out together. This phenomenon occurs because each of CNTs constituting the CNT array is bundled with surrounding CNTs by van der Waals forces. Note that, in general, the technique of drawing the CNT web out from the CNT array is sometimes referred to as "CNT spinning", "CNT drawing", and the like. Hereinafter, a direction (i.e., an up-down direction in (a) of Fig. 2) in which the CNT web 10 is drawn out from the CNT array 1 is referred to as "drawing direction", and a direction (i.e., a left-right direction in (a) of Fig. 2) which is perpendicular to the drawing direction is referred to as "width direction".

The hard-to-draw part forming step is a step of irradiating CNTs 2 with a laser beam by a laser device on both outer sides of a region D (which is surrounded by dashed lines in (a) of Fig. 2) which is of the CNT array 1 and from which the CNT web 10 is to be drawn out. In this step, the CNTs 2 on both outer sides of edges of the region D in the width direction are irradiated with the laser beam from a side opposite to the substrate 3. The laser device can be a conventional laser device such as a gas laser device, a solid-state laser device, a semiconductor laser device, a liquid laser device, a carbon dioxide laser device, or the like. The laser irradiation is carried out by, for example, moving a base (not illustrated) on which the substrate 3 is placed at a predetermined speed in a fixed direction while irradiating the CNTs 2 of the CNT array 1 with a laser beam of constant output. In this case, a time of laser irradiation with respect to the CNT array 1 can be adjusted by adjusting the predetermined speed and a pulse period of laser. Note that the hard-to-draw part forming step is not limited to the laser irradiation.

In Embodiment 1, the output of laser, the irradiation time, and the pulse period are adjusted such that a height, from the substrate 3, of CNTs 2 which have been irradiated with a laser beam becomes smaller than a length of one (1) CNT 2 in the CNT array 1 (that is, a length of a CNT 2 which has not been irradiated with a laser beam) (see Fig. 2). Note that the laser output, the irradiation time, and the pulse period are adjusted so that the CNTs 2 which have been irradiated with a laser beam are not removed completely. For example, in a case where the pulse period of a laser beam is sufficiently long, such a case is not preferable because CNTs 2 in a groove 11 will be removed completely by influence of heat caused due to the laser irradiation.

In Embodiment 1, for example, laser irradiation is carried out such that a height of CNTs 2 irradiated with a laser beam becomes 10% to 90% with respect to a height of the CNTs 2 which have not been irradiated with a laser beam. From this, a groove 11, which has a depth smaller than a length of CNTs 2 of the CNT array 1 (that is, a length of CNTs 2 which have not been irradiated with a laser beam), is formed on a surface of the CNT array 1 which surface is opposite to a surface making contact with the substrate 3. Further, the CNTs 2 irradiated with a laser beam keep entangled in the groove 11. In the hard-to-draw part forming step of Embodiment 1, two grooves 11 which are parallel to the drawing direction are formed in the CNT array 1.

A width of each of the grooves 11 (that is, a length of the grooves 11 in the left-right direction in (a) and (b) of Fig. 2) is set to be smaller (i.e., narrower) than a length of CNTs 2 in the CNT array 1 (that is, a length of CNTs 2 which have not been irradiated with a laser beam). This makes it possible to prevent CNTs 2 in the grooves 11 from being removed completely by influence of heat caused due to the laser irradiation. Moreover, it is possible to increase a ratio of CNTs 2 which are to be drawn out as a CNT web 10, from among the CNTs 2 in the CNT array 1. In particular, the width of each of the grooves 11 is preferably 10% to 90% of a height of CNTs 2 which have not been irradiated with a laser beam. For example, each of the width of the groove 11 and the width of the hard-to-draw part 12 can be 50 µm to 1000 µm.

Further, in the hard-to-draw part forming step, the grooves 11 are formed by the laser irradiation, and the hard-to-draw parts 12 abutting on edges of the grooves 11 in the width direction are also formed by the laser irradiation. The hard-to-draw parts 12 can be formed by adjusting the laser output, the irradiation time, and the pulse period. Specific examples of the laser output, the irradiation time, and the pulse period in the hard-to-draw part forming step will be later described in Example. Each of the hard-to-draw parts 12 is formed preferably to have a height similar to a length of the CNT 2 (e.g., 70% to 100%, preferably 90% to 100% of a height of CNTs 2 which have not been irradiated with a laser beam). A width of each of the grooves 11 and each of the hard-to-draw parts 12 (that is, a length of each of the grooves 11 and the hard-to-draw parts 12 in the left-right direction in (a) and (b) of Fig. 2) is preferably set to be narrower than a length of CNTs 2 in the CNT array 1 (that is, a length of CNTs 2 which have not been irradiated with a laser beam).

As above described, in the hard-to-draw part forming step, the grooves 11 and the hard-to-draw parts 12 are formed by irradiating the CNT array 1 with a laser beam from the side opposite to the substrate 3.

In Embodiment 1, two grooves 11 are formed in the CNT array 1. Note, however, that Embodiment 1 is not limited to this aspect. For example, it is possible to employ an aspect in which three or more parallel grooves 11 are formed in the CNT array 1, and CNT webs are drawn out from regions (i.e., in inner side regions) between the plurality of grooves 11 (i.e., hard-to-draw parts 12) in the CNT array 1.

### <Drawing out step>

Next, the following description will discuss the drawing out step of Embodiment 1 with reference to Fig. 3. Fig. 3 is a view for explaining a drawing out step in Embodiment 1. (a) of Fig. 3 is a plan view illustrating a state in which the CNT web 10 has begun to be drawn out from the CNT array 1, (b) of Fig. 3 is a plan view illustrating a state in which the CNT web 10 is drawn out from the CNT array 1, and (c) of Fig. 3 is a cross-sectional view taken along the line A-A in (b) of Fig. 3 and illustrates a state after the CNT web 10 has been drawn out from the CNT array 1.

The drawing out step is a step of drawing the CNT web 10 out from a region between the hard-to-draw parts 12 in the CNT array 1. Specifically, first, as illustrated in (a) of Fig. 3, a bundle of a certain amount of CNTs 2 which exist at an edge in the drawing direction of a region D (between two hard-to-draw parts 12) is attached to a pulling member 30 of a pulling device. Note that the region D is a region from which the CNT web 10 is to be drawn out from the CNT array 1. Then, the pulling member 30 is moved in the drawing direction so as to be away from the substrate 3 (i.e., in a direction indicated by the arrow in (a) of Fig. 3). From this, the bundle of CNTs 2 attached to the pulling member 30 is detached from the substrate 3, and is thus drawn out from the CNT array 1. Here, as the pulling member 30, a long and thin cylindrical member having a length identical with a length of the region D in the width direction is used. Note, however, that the pulling member 30 is not limited to this member, provided that the pulling member 30 is a member having a surface or a side which extends in the width direction of the region D and whose length is equal to or greater than the length of the region D in the width direction.

Furthermore, in a case where the pulling member 30 is moved so as to be away from the substrate 3, CNTs 2 are drawn out from the CNT array 1 one after another by van der Waals forces applied between the drawn-out CNTs 2 and other CNTs 2 existing in the CNT array 1, and thus a CNT web 10 is formed, and the CNT web 10 is drawn out (see (b) of Fig. 3).

Here, the conventional method for drawing out CNTs described in the above section of Background Art has the foregoing problem that edge scraps occurring due to laser irradiation are mixed in the CNT web.

On the contrary, according to the drawing out method of Embodiment 1, the hard-to-draw parts 12 are formed at edges of the region D in the width direction, and further the grooves 11 are formed at edges of the hard-to-draw parts 12 which edges are opposite to the region D. A depth of each of the grooves 11 is set to be smaller than a length of CNTs 2 in the CNT array 1 (that is, a length of CNTs 2 which have not been irradiated with a laser beam). In other words, in each of the grooves 11, CNTs 2 exist which have a height, from the substrate 3, that is shorter than the length of CNTs 2 in the CNT array 1 (that is, the length of CNTs 2 which have not been irradiated with a laser beam). As a result, CNTs 2 existing in the grooves 11 and CNTs 2 existing in the hard-to-draw parts 12 are being entangled. From this, when CNTs 2 are drawn out from the CNT array 1, the CNTs 2 existing in the hard-to-draw parts 12 will not be drawn out, and the CNT web 10 can be drawn out by drawing out only CNTs 2 existing in the region D. Therefore, it is possible to inhibit edge scraps from being generated by drawing out the hard-to-draw parts 12, and to inhibit generated edge scraps from being mixed in the CNT web 10. Moreover, in Embodiment 1, the grooves 11 are formed in parallel with each other, and it is therefore possible to draw out a uniform CNT web 10 in the drawing direction.

### (Manufacture of CNT yarn)

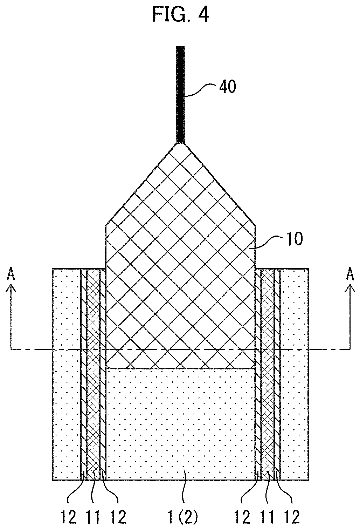

Next, the following description will discuss a method for manufacturing a CNT yarn of Embodiment 1 with reference to Fig. 4. Fig. 4 is a view for explaining a method for manufacturing a CNT yarn in Embodiment 1, specifically, a plan view illustrating a state of manufacturing a CNT yarn 40 while drawing out a CNT web 10.

A method for manufacturing a CNT yarn in accordance with an embodiment of the present invention includes a drawing step of drawing out a CNT web 10 with the above described drawing method for drawing out the CNT web 10, and a twining step of twining the CNT web 10 which has been drawn out in the drawing step.

The twining step can be carried out with use of a publicly known twining technique. For example, twining of a CNT yarn 40 can be carried out by (i) providing a spindle which has a rotation axis extending in the drawing direction of the CNT web 10 and moves in the drawing direction and (ii) rotating the spindle while drawing the CNT web 10 out as illustrated in Fig. 4. Alternatively, it is possible to manufacture the CNT yarn by twining a plurality of CNT webs 10 which have been drawn out by the drawing step, stacked, and cut to have a predetermined width. The CNT yarn thus manufactured by twining the stacked CNT webs 10 has enhanced strength, as compared with a CNT yarn manufactured by twining one layer of CNT web 10.

The CNT yarn 40 which is manufactured by the manufacturing method in accordance with Embodiment 1 is made with use of the uniform CNT web 10 which has been drawn out by the drawing step and in which edge scraps are not mixed. Therefore, unevenness in physical properties (e.g., electrical conductivity, heat conductivity, mechanical strength) among different portions is restricted, and it is thus possible to manufacture a further uniform CNT yarn. Moreover, in Embodiment 1, two grooves 11 are formed in parallel with the drawing direction, and therefore the CNT web 10 is uniform in the drawing direction. This makes it possible to manufacture the CNT yarn 40 having uniform physical properties in the length direction.

### Embodiment 2

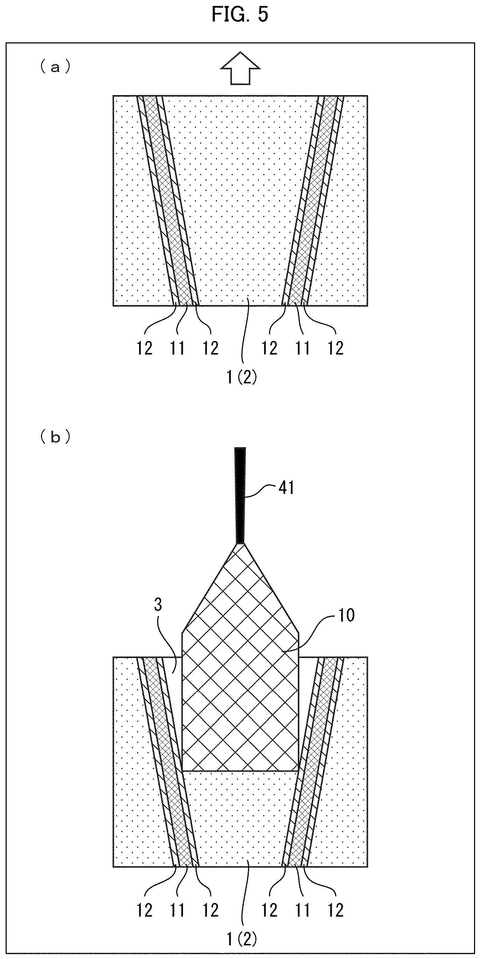

The following description will discuss another embodiment of the present invention with reference to Fig. 5. For convenience of explanation, identical reference numerals are given to constituent members having functions identical with those of the constituent members described in the foregoing embodiment, and descriptions of such constituent members are omitted here.

A method for drawing out a CNT web 10 in accordance with Embodiment 2 is different from that of Embodiment 1 in shape of hard-to-draw parts 12 which are formed in a CNT array 1 in a hard-to-draw part forming step.

(a) of Fig. 5 is a plan view illustrating the CNT array 1 after the hard-to-draw part forming step, and (b) of Fig. 5 is a plan view illustrating a state of manufacturing a CNT yarn 41 while drawing out the CNT web 10.

As illustrated in (a) of Fig. 5, in the hard-to-draw part forming step of Embodiment 2, grooves 11 and hard-to-draw parts 12 are formed such that a distance between the grooves 11 and a distance between the hard-to-draw parts 12 change (in particular, the distances become larger) toward a side (indicated by the arrow in (a) of Fig. 5) to which the CNT web 10 is drawn out from the CNT array 1. According to the configuration, a width of the CNT web 10 gradually becomes smaller as the CNT web 10 is drawn out from the CNT array 1 in the drawing out step. As a result, as illustrated in (b) of Fig. 5, a diameter of the CNT yarn 41 that is manufactured with use of the CNT web 10 of Embodiment 2 gradually becomes smaller. From this, it is possible to manufacture the CNT yarn 41 whose physical properties (e.g., electrical conductivity, heat conductivity, and mechanical strength) gradually change in the length direction.

According to the drawing out step in accordance with Embodiment 2 also, the hard-to-draw parts 12 are formed at edges of boundary regions (in the width direction) between the CNT array 1 and the CNT web 10, and further the grooves 11 are formed at edges of the hard-to-draw parts 12 which edges are opposite to the region D, as with Embodiment 1. Therefore, when CNTs 2 are drawn out from the CNT array 1, the CNTs 2 existing in the hard-to-draw parts 12 will not be drawn out, and the CNT web 10 can be drawn out by drawing out only CNTs 2 existing in the region D. Therefore, it is possible to inhibit edge scraps from being generated by drawing out the hard-to-draw parts 12, and to inhibit generated edge scraps from being mixed in the CNT web 10.

For example, in a case where resistance heating is carried out with use of the CNT yarn 41, a temperature rise can be enhanced in a part of the CNT yarn 41 which part has a smaller diameter, and a temperature rise can be restrained in a part of the CNT yarn 41 which part has a larger diameter. Moreover, for example, it is possible to manufacture the CNT yarn 41 whose electric resistance is higher in the part having a smaller diameter and electric resistance is lower in the part having a larger diameter. For example, in a case where the CNT yarn 41 is wound on a balloon that is formed from an elastic film bag and the balloon is blown up, the balloon is swollen more in a part on which the CNT yarn 41 having the smaller diameter is wound, and the balloon is swollen less in a part on which the CNT yarn 41 having the larger diameter is wound.

### Embodiment 3

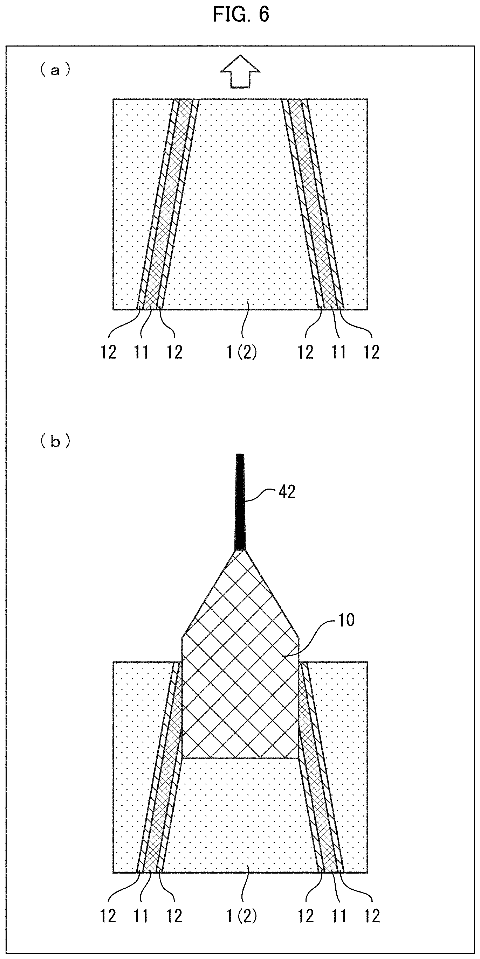

The following description will discuss another embodiment of the present invention with reference to Fig. 6. For convenience of explanation, identical reference numerals are given to constituent members having functions identical with those of the constituent members described in the foregoing embodiments, and descriptions of such constituent members are omitted here.

A method for drawing out a CNT web 10 in accordance with Embodiment 3 is different from that of Embodiment 1 in shape of hard-to-draw parts 12 which are formed in a CNT array 1 in a hard-to-draw part forming step.

(a) of Fig. 6 is a plan view illustrating the CNT array 1 after the hard-to-draw part forming step, and (b) of Fig. 6 is a plan view illustrating a state of manufacturing a CNT yarn 42 while drawing out the CNT web 10.

As illustrated in (a) of Fig. 6, in the hard-to-draw part forming step of Embodiment 3, grooves 11 and hard-to-draw parts 12 are formed such that a distance between the grooves 11 and a distance between the hard-to-draw parts 12 change (in particular, the distances become smaller) toward a side (indicated by the arrow in (a) of Fig. 6) to which the CNT web 10 is drawn out from the CNT array 1. According to the configuration, a width of the CNT web 10 gradually becomes larger as the CNT web 10 is drawn out from the CNT array 1 in the drawing out step. As a result, as illustrated in (b) of Fig. 6, a diameter of the CNT yarn 42 that is manufactured with use of the CNT web 10 of Embodiment 3 gradually becomes larger. From this, it is possible to manufacture the CNT yarn 42 whose physical properties (e.g., electrical conductivity, heat conductivity, and mechanical strength) gradually change in the length direction.

According to the drawing out step in accordance with Embodiment 3 also, the hard-to-draw parts 12 are formed at edges of boundary regions (in the width direction) between the CNT array 1 and the CNT web 10, and further the grooves 11 are formed at edges of the hard-to-draw parts 12 which edges are opposite to the region D, as with Embodiment 1. Therefore, when CNTs 2 are drawn out from the CNT array 1, the CNTs 2 existing in the hard-to-draw parts 12 will not be drawn out, and the CNT web 10 can be drawn out by drawing out only CNTs 2 existing in the region D. Therefore, it is possible to inhibit edge scraps from being generated by drawing out the hard-to-draw parts 12, and to inhibit generated edge scraps from being mixed in the CNT web 10.

### Embodiment 4

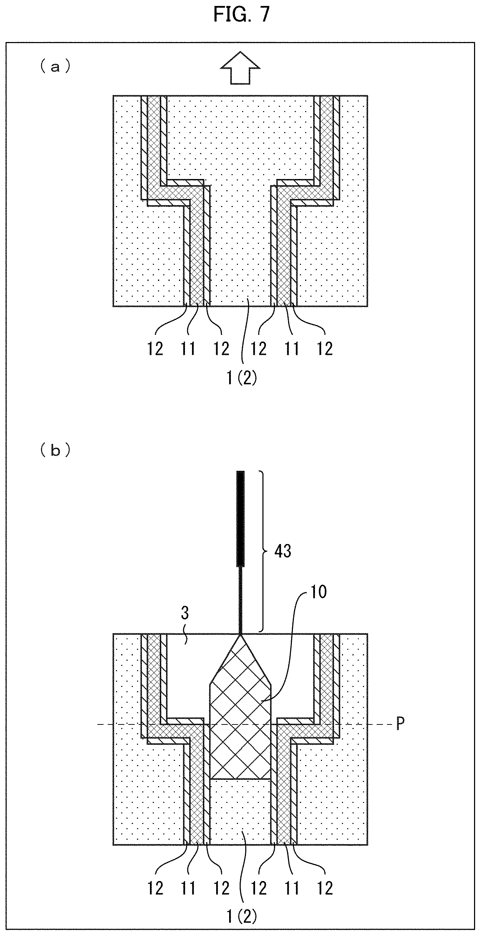

The following description will discuss another embodiment of the present invention with reference to Fig. 7. For convenience of explanation, identical reference numerals are given to constituent members having functions identical with those of the constituent members described in the foregoing embodiments, and descriptions of such constituent members are omitted here.

A method for drawing out a CNT web 10 in accordance with Embodiment 4 is different from that of Embodiment 1 in shape of hard-to-draw parts 12 which are formed in a CNT array 1 in a hard-to-draw part forming step.

(a) of Fig. 7 is a plan view illustrating the CNT array 1 after the hard-to-draw part forming step, and (b) of Fig. 7 is a plan view illustrating a state of manufacturing a CNT yarn 43 while drawing out the CNT web 10.

As illustrated in (a) of Fig. 7, in the hard-to-draw part forming step of Embodiment 4, grooves 11 and hard-to-draw parts 12 are formed such that a distance between the two grooves 11 changes (in particular, the distance changes to form steps) at a point P in a direction (indicated by the arrow in (a) of Fig. 7) in which the CNT web 10 is drawn out from the CNT array 1. Specifically, the grooves 11 and the hard-to-draw parts 12 are formed such that a distance between the grooves 11 (i.e., a distance between the hard-to-draw parts 12) on a drawing side from the point P (toward which the CNT web 10 is drawn) is greater than a distance between the grooves 11 (i.e., a distance between the hard-to-draw parts 12) on a side opposite to the drawing side from the point P. According to the configuration, a width of the CNT web 10 suddenly becomes smaller at the point P when the CNT web 10 is drawn out from the CNT array 1 in the drawing out step. As a result, as illustrated in (b) of Fig. 7, a diameter of the CNT yarn 42 that is manufactured with use of the CNT web 10 of Embodiment 4 suddenly becomes smaller at a certain point in the length direction. From this, it is possible to manufacture the CNT yarn 43 whose physical properties (e.g., electrical conductivity, heat conductivity, and mechanical strength) suddenly change in the length direction.

According to the drawing out step in accordance with Embodiment 4 also, the hard-to-draw parts 12 are formed at edges of boundary regions (in the width direction) between the CNT array 1 and the CNT web 10, and further the grooves 11 are formed at edges of the hard-to-draw parts 12 which edges are opposite to the region D, as with Embodiment 1. Therefore, when CNTs 2 are drawn out from the CNT array 1, the CNTs 2 existing in the hard-to-draw parts 12 will not be drawn out, and the CNT web 10 can be drawn out by drawing out only CNTs 2 existing in the region D. Therefore, it is possible to inhibit edge scraps from being generated by drawing out the hard-to-draw parts 12, and to inhibit generated edge scraps from being mixed in the CNT web 10.

In the above described embodiments, the CNT web 10 is drawn out from the CNT array 1 that is formed on the substrate 3. Note, however, that the present invention is not limited to this aspect. According to an aspect of the present invention, for example, it is possible that a CNT array 1 is formed on a substrate 3, and a hard-to-draw part forming step (that is, a step of forming grooves and hard-to-draw parts) and a drawing out step of drawing out a CNT web are carried out with respect to a CNT array that has been peeled off from the substrate.

The present invention is not limited to the embodiments, but can be altered by a skilled person in the art within the scope of the claims. The present invention also encompasses, in its technical scope, any embodiment derived by combining technical means disclosed in differing embodiments.

### Examples

### <First Example>

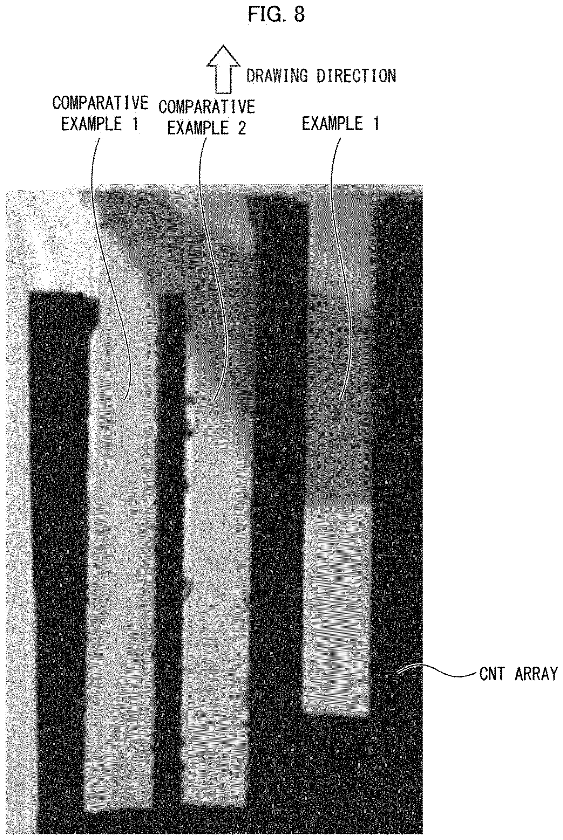

The following description will discuss a working example of the present invention with reference to Figs. 8 through 10.

First Example describes Example 1 of the method for drawing out the CNT web in accordance with the present invention and Comparative Examples 1 and 2 of a method for drawing out a CNT web, which are Comparative Examples of the present invention.

In Example 1 and Comparative Examples 1 and 2, a CNT array having the following properties was used.

Type of CNT: Multi-walled CNT including 5 to 10 layers
Outer diameter of CNT: 11 nm
Length of CNT: 300 µm
Density of CNT: 2 × 10¹⁰ tubes/cm².

In the hard-to-draw part forming step of Example 1 and Comparative Examples 1 and 2, the substrate 3 on which the CNT array 1 had been provided was placed on a base, and grooves and hard-to-draw parts 12 were formed in the CNT array 1 while moving the base at 1000 mm/sec in a fixed direction while irradiating a fixed point of the CNT array 1 with a laser beam with use of a laser device (manufactured by Panasonic, LP-S505). In this case, the CNT array 1 was irradiated with the laser beams so that a distance between the grooves became 5 mm. Table 1 shows laser irradiation conditions on the CNT array 1 in Example 1 and Comparative Examples 1 and 2.

**[Table 1]**

| | Laser Output (W) | Pulse Period (µs) | Height of Base (cm) |
|---|---|---|---|
| Example 1 | 8 | 2 | 14 |
| Comparative Example 1 | 8 | 10 | 14 |
| Comparative Example 2 | 8 | 20 | 14 |

The CNT array 1 was irradiated with the later beam under the above conditions and, in Comparative Examples 1 and 2 (that is, in the cases where the pulse period was longer), a processing depth by the laser beam was deep and the laser beam reached the substrate 3, and therefore CNTs 2 did not remain in the grooves 11. On the contrary, in Example 1 (that is, in the case where the pulse period was shorter), a processing depth by the laser beam was shallow, and CNTs 2 having a height smaller than a height of CNTs 2 in the CNT array 1 remained in the grooves 11.

Next, with respect to the CNT array 1 which has been subjected to the hard-to-draw part forming step under the above conditions, a drawing out step was carried out. In First Example, a CNT web 10 was drawn out from the CNT array 1 by 5.7 m per minute while upwardly inclining the CNT web 10 at 2.9° with respect to the substrate 3.

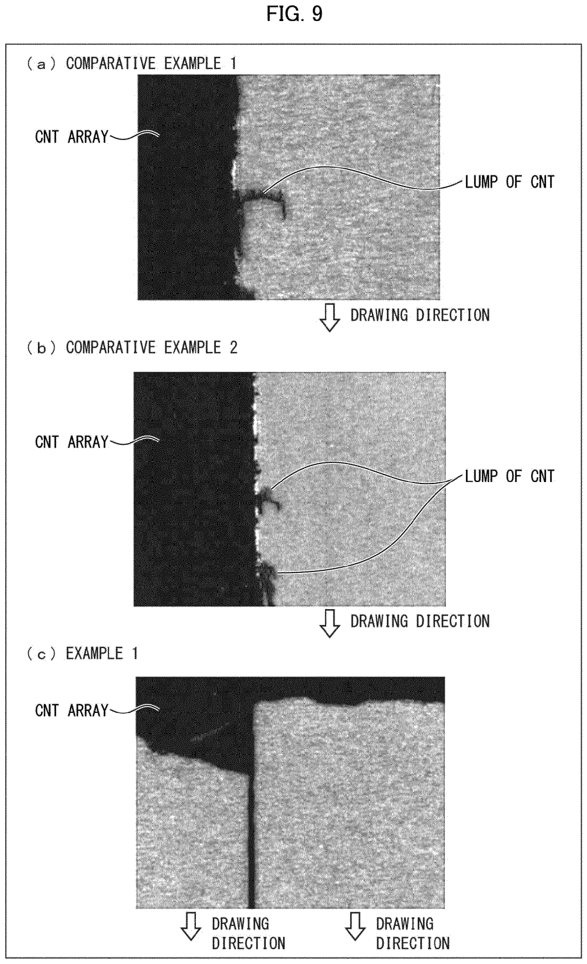

Fig. 8 is a view showing the CNT array 1 after the CNT webs 10 were drawn out from the CNT array 1. (a) through (c) of Fig. 9 are enlarged views showing the vicinity of edges in the width direction of the CNT array 1, and show states after the CNT webs 10 have been drawn out by the respective drawing out methods of Comparative Example 1, Comparative Example 2, and Example 1. As shown in Fig. 8 and Fig. 9, in the drawing out methods of Comparative Example 1 and Comparative Example 2, edge scraps were seen in the vicinity of edges of the CNT array 1 in the width direction. Note that the edge scrap was formed when CNTs 2 in the hard-to-draw part 12 were drawn out as a lump together with the CNT web 10. On the contrary, in the drawing out method of Example 1, no edge scrap was seen at the edge of the CNT array 1 in the width direction. That is, according to the method of Example 1, the CNTs 2 remaining in the grooves 11 are entangled with the CNTs 2 existing in the hard-to-draw parts 12, and therefore the CNTs 2 existing in the hard-to-draw parts 12 were not drawn out when CNTs 2 were drawn out from the CNT array 1.

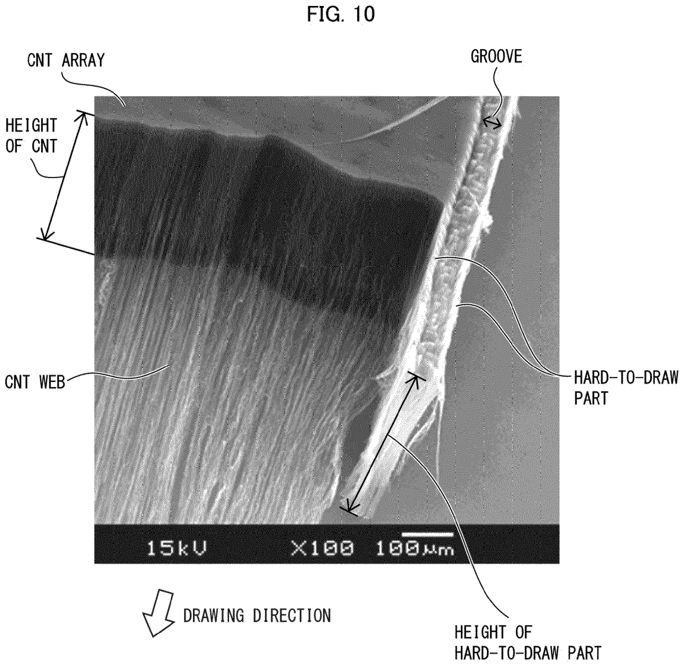

Fig. 10 is a bird's-eye view showing a state in which the CNT web 10 is drawn out from the CNT array 1 by the drawing out method of Example 1. As shown in Fig. 10, in Example 1, the hard-to-draw parts 12 were not drawn out when the CNT web 10 was drawn out from the CNT array 1, and the CNT web 10 could be uniformly drawn out.

### <Second Example>

The following description will discuss other examples of the present invention.

In Second Example, a CNT yarn of Example 2 and a CNT yarn of Example 3 were produced by the methods of the present invention for drawing out a CNT web. Each of the CNT yarns of Examples 2 and 3 has a diameter that varies in the length direction.

In Second Example, a CNT array 1 identical with that of First Example was used. Moreover, in the hard-to-draw part forming step, the substrate 3 on which the CNT array 1 had been provided was placed on a base, and grooves and hard-to-draw parts 12 were formed in the CNT array 1 while moving the base at 1000 mm/sec while irradiating a fixed point of the CNT array 1 with a laser beam with use of the laser device which was also used in Example 1. Moreover, in Second Example, the CNT array 1 was irradiated with a laser beam under a condition identical with that of Example 1 in First Example.

In production of the CNT yarn of Example 2, a length of the CNT array 1 in the drawing direction was 1 cm, and two grooves 11 were formed such that a width (i.e., a distance between the two grooves 11) of a CNT web 10 to be drawn out from the CNT array 1 gradually became smaller from 30 mm to 10 mm toward a side opposite to the drawing direction.

While drawing the CNT web 10 having a length of approximately 6 m out from the CNT array 1 in which the two grooves 11 had been formed as above described, the CNT web 10 was twined, and thus the CNT yarn of Example 2 was produced. Table 2 shows details of drawing conditions, twining conditions, and measured data in relation to the produced CNT yarn. Note that a resistance of the CNT yarn shown in Table 2 is a resistance measured for a length of 1 cm.

**[Table 2]**

| Distance from drawing-start position on CNT array (cm) | Drawn width of CNT web (mm) | Drawn length of CNT web (m) | Number of twining (T/m) | Diameter of CNT yarn (µm) | Resistance of CNT yarn (Ω) |
|---|---|---|---|---|---|
| 0 | 30 | 0 | 5000 | 32 | 223 |
| 0.33 | 23 | 2 | 10000 | 27 | 280 |
| 0.67 | 16 | 4 | 14000 | 23 | 481 |
| 1 | 10 | 6 | 20000 | 18 | 786 |

As shown in Table 2, the two grooves 11 were formed such that the width of the CNT web 10 to be drawn out from the CNT array 1 gradually became smaller from 30 mm to 10 mm, and thus the CNT yarn of Example 2 having a diameter that gradually becomes smaller could be produced. Moreover, as shown in Table 2, the CNT yarn of Example 2 had a resistance that gradually increased as the diameter gradually became smaller.

In production of the CNT yarn of Example 3, a length of the CNT array 1 in the drawing direction was 1 cm, and two grooves 11 were formed such that a width (i.e., a distance between the two grooves 11) of a CNT web 10 to be drawn out from the CNT array 1 becomes smaller from 30 mm to 10 mm at a point 0.5 cm away from a drawing-start position on the CNT array 1 in a direction opposite to the drawing direction.

While drawing the CNT web 10 having a length of approximately 6 m out from the CNT array 1 in which the two grooves 11 had been formed as above described, the CNT web 10 was twined, and thus the CNT yarn of Example 3 was produced. Table 3 shows details of drawing conditions, twining conditions, and measured data in relation to the produced CNT yarn. Note that, in the production of the CNT yarn of Example 3, the number of twining was changed from 5000 T/m to 20000 T/m at the point 0.5 cm away from the drawing-start position on the CNT array 1 in the direction opposite to the drawing direction.

**[Table 3]**

| Distance from drawing-start position on CNT array (cm) | Drawn width of CNT web (mm) | Drawn length of CNT web (m) | Number of twining (T/m) | Diameter of CNT yarn (µm) |
|---|---|---|---|---|
| 0 | 30 | 0 | 5000 | 32 |
| 0.33 | 30 | 2 | 5000 | 33 |
| 0.5 | 10 | 3 | 20000 | 19 |
| 1 | 10 | 6 | 20000 | 19 |

As shown in Table 3, the two grooves 11 were formed as above described, and thus the CNT yarn of Example 3 having a diameter that suddenly becomes smaller could be produced.

### Reference Signs List

- 1:: Carbon nanotube array (CNT array)
- 2:: Carbon nanotube (CNT)
- 10:: Carbon nanotube web (CNT web)
- 11:: Groove
- 12:: Hard-to-draw part

## Claims

1. A method for drawing out a carbon nanotube web from a carbon nanotube array, said method comprising:
a hard-to-draw part forming step of (i) forming a plurality of grooves on at least one surface of the carbon nanotube array which at least one surface is perpendicular to an orientation direction of carbon nanotubes such that each of the plurality of grooves has a width that is smaller than a length of one carbon nanotube in the carbon nanotube array and (ii) forming, on the carbon nanotube array, a plurality of hard-to-draw parts in which the carbon nanotubes are difficult to draw out from the carbon nanotube array when the carbon nanotube web is drawn out from a region between the plurality of grooves in the carbon nanotube array, the plurality of hard-to-draw parts being formed in respective regions which are provided between adjacent two of the plurality of grooves so as to abut on the adjacent two of the plurality of grooves; and
a drawing out step of drawing the carbon nanotube web out from a region between the plurality of hard-to-draw parts in the carbon nanotube array.

2. The method as set forth in claim 1, wherein:
in the hard-to-draw part forming step, the plurality of grooves and the plurality of hard-to-draw parts are formed by irradiating the at least one surface with a laser beam.

3. The method as set forth in claim 1 or 2, wherein:
the plurality of grooves are two grooves which are formed such that a distance between the two grooves changes at a certain point in a direction in which the carbon nanotube web is drawn out from the carbon nanotube array.
